(19) Europäisches Patentamt
European Patent Office
Office européen des brevets

(11) **EP 4 462 742 A1**

(12) **EUROPEAN PATENT APPLICATION**
published in accordance with Art. 153(4) EPC

(43) Date of publication:
**13.11.2024 Bulletin 2024/46**

(21) Application number: **22918172.2**

(22) Date of filing: **28.07.2022**

(51) International Patent Classification (IPC):
*H04L 27/26* (2006.01)      *H04B 17/11* (2015.01)

(86) International application number:
**PCT/CN2022/108588**

(87) International publication number:
**WO 2023/130716 (13.07.2023 Gazette 2023/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.01.2022   CN 202210016521**

(71) Applicant: **Shanghai Wuqi Microelectronics Co.,
Ltd.
Shanghai 201210 (CN)**

(72) Inventors:
• **GU, Qiang**
**Shanghai 201210 (CN)**
• **ZONG, Jinbang**
**Shanghai 201210 (CN)**

(74) Representative: **Zaboliene, Reda**
**Metida
Business center Vertas
Gyneju str. 16
01109 Vilnius (LT)**

(54) **IQ IMBALANCE COMPENSATION METHOD FOR WIFI BROADBAND TRANSMITTING AND RECEIVING PATHS, AND APPLICATION**

(57)     This application discloses an IQ imbalance compensation method for WiFi broadband transmitting and receiving paths and application thereof. This application relates to the field of digital signal processing. The method comprises: inputting IQ signals into a frequency-related IQ imbalance compensation device FD-IQMC; the FD-IQMC device first performing frequency-independent overall compensation on IQ imbalance by means of a frequency-independent IQ imbalance compensation module FI-iqmc, and then selecting one signal from the IQ signals and inputting same into a Frac-delay filter and an Amp-FIR filter so as to respectively perform phase and amplitude compensation of frequency-selectivity; and inputting another signal into a delay module to be time-aligned with the selected signal.

FIG.5

**Description**

CROSS-REFERENCE TO RELATED APPLICATIONS

The application claims priority to Chinese patent application No. 202210016521.0, filed on January 7, 2022, the entire contents of which are incorporated herein by reference.

FIELD OF THE TECHNOLOGY

This application relates to the field of digital signal processing, and specifically, to an IQ imbalance compensation method for WiFi broadband transmitting and receiving paths and application thereof.

BACKGROUND OF THE DISCLOSURE

As wireless communication technology has been developing towards high speed, miniaturization and integration in recent years, zero intermediate frequency (ZIF) architecture transceivers have been widely used in electronic systems with high bandwidth and high sampling rates, due to its low cost and easy integration. The ZIF architecture uses analog quadrature mixing technology to directly convert RF signals into baseband in-phase (I) and quadrature (Q) signals, thus requiring fewer analog components than the traditional superheterodyne architecture. However, analog devices have certain non-ideal characteristics due to design limitations, resulting in I/Q imbalance (IQ imbalance) due to amplitude and phase mismatch between I and Q signals, leading to problems such as constellation diagram distortion, increased bit error rate and EVM deterioration, affecting the performance of the communication system. In broadband communication systems with higher silicon integration and larger modulation orders, the above-mentioned I/Q imbalance problem is often further aggravated. Considering that WiFi6/WiFi6E needs to support larger bandwidth (e.g.160MHz) and higher modulation modes (e.g.1024QAM/4096QAM), the system design of high bandwidth and high-order modulation puts forward more stringent standards and requirements for the calibration and compensation of the non-ideal characteristics of the RF front-end.

Currently, the industry has proposed a variety of IQ imbalance estimation methods and digital compensation schemes to improve communication quality. Traditional research on solving the IQ imbalance problem usually adopts frequency-independent (FI) imbalance error, and the FI imbalance error value is a constant. The above method is difficult to meet the performance requirements of broadband systems: for broadband systems, the amplitude and phase imbalance errors introduced by factors such as inconsistent frequency response of devices between I/Q channels will change with the change of signal frequency, which is a frequency-dependent (FD) error. With the use of larger bandwidths (80MHz/160MHz) in the fifth-generation wireless network technology (WiFi5) and the sixth-generation network technology (WiFi6), the traditional frequency-independent IQ (FI-IQ) compensation method can no longer meet the performance requirements of the system. It is necessary to use digital signal processing technology based on the frequency selectivity of IQ imbalance to perform broadband frequency-dependent IQ (FD-IQ) compensation to improve the overall quality of large-bandwidth signals.

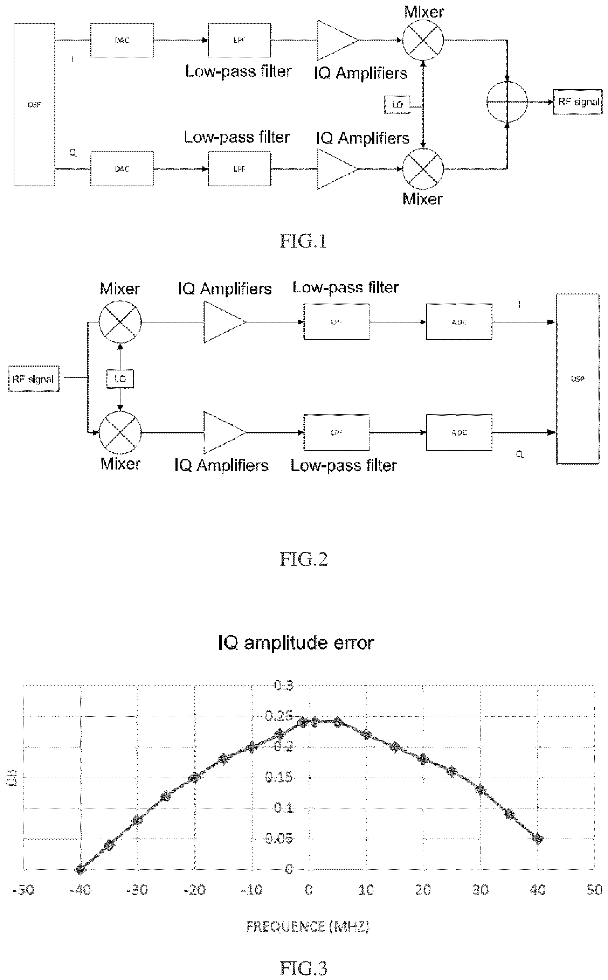

As an example, the frequency selectivity of IQ imbalance over a broadband is described by combining the zero-IF model of the transmit (TX) path shown in FIG. 1 and the zero-IF model of the receive (RX) path shown in FIG.2. The main sources of IQ imbalance in the TX path in FIG.1 are the DAC (Digital-to-Analog Converter, also known as D/A converter), low-pass filter, IQ amplifier and mixer; the main sources of IQ imbalance in the RX path in FIG.2 are the mixer, IQ amplifier, low-pass filter and ADC (Analog-to-Digital Converter, also known as A/D converter). Since the imbalance of the mixer's local oscillator (LO) produces a fixed deviation in IQ, the three devices that mainly provide frequency selectivity in the model are DAC/ADC, low-pass filter, and IQ amplifier. When the IQ signals pass through these three devices, the amplitude gain and phase changes are mismatched and show different characteristics in the frequency domain. The larger the bandwidth, the more obvious the change in IQ error. This is the source of the frequency selectivity of IQ imbalance in broadband.

Currently, there are mainly three methods for processing the above broadband IQ imbalance.

The first method is to add a sequence of known good characteristics to the signal through a training sequence, and the sequence needs to be continuously sent and received during communication for calibration, and then the calculated characteristics are compensated. The calibration method has a complicated process and reduces the transmission efficiency.

The second method is to perform frequency domain compensation after testing the IQ characteristics through a single tone. This calibration method is easily affected by factors such as frequency deviation, which affects the accuracy.

The third method is a blind estimation method, which sends a broadband signal, calculates and statistics the IQ characteristics, and then designs and compensates the complex filter. This calibration method requires a large amount of statistical data, has a slow calculation process, and has a large resource overhead in the compensation structure.

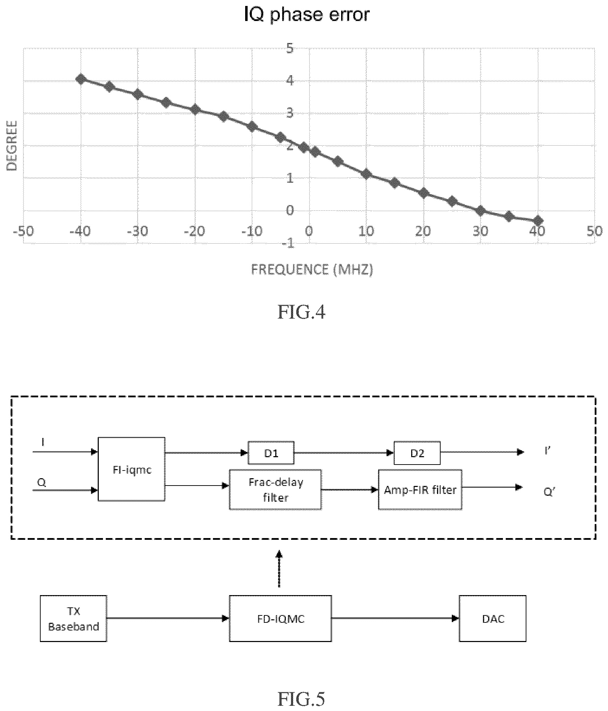

On the other hand, for three types of devices, such as DAC/ADC, low-pass filters, and IQ amplifiers, their double-sideband responses at baseband frequency and after cascading show symmetrical characteristics, that is, the amplitude response is a symmetrical even function, and the phase response is an odd function. At the same time, it was found in the study that the frequency selectivity of the IQ error can be approximately expressed as a distribution characteristic of amplitude symmetry and phase linear change, see the distribution diagram of the measured broadband IQ amplitude error shown in FIG.3, and the distribution diagram of the measured broadband IQ phase error shown in FIG.4. The above-mentioned type of zero intermediate frequency structure has the characteristics of stronger low-pass characteristics and less significant band-pass effect.

Based on the above-mentioned prior art, how to provide a compensation scheme that can compensate for IQ imbalance with frequency selectivity, and has the advantages of easy structure control, low resource overhead and high compensation accuracy is a technical problem needs to be solved urgently at present.

## SUMMARY

The purpose of the application is to overcome the deficiencies of the prior art, and to provide IQ imbalance compensation method for WiFi broadband transmitting and receiving paths and application thereof. The method comprising a frequency-dependent IQ imbalance compensation device FD-IQMC, the FD-IQMC device is used for IQ imbalance compensation on an IQ signal. Wherein, the FD-IQMC device comprises a non-frequency-selective compensation structure, and a frequency-selective compensation structure corresponding to phase and amplitude respectively. The FD-IQMC device performs IQ imbalance compensation based on a pre-compensation in a transmitting path, and performs IQ imbalance compensation based on a post-compensation in a receiving path. The application has the advantages of easy structure control, low resource overhead and high compensation accuracy, and can effectively reduce the image rejection ratio IRR, EVM degradation and bit error rate.

To achieve the above goals, the application provides the following technical solutions.

An IQ imbalance compensation method for WiFi broadband transmitting and receiving paths, the method comprising: for a transmitting path, an IQ signal output by a TX Baseband is input into a frequency-dependent IQ imbalance compensation device FD-IQMC for frequency-dependent IQ imbalance compensation, and the compensated output signal I'Q' is input to a digital-to-analog converter DAC; and for a receiving path, an IQ signal output by an analog-to-digital converter ADC is input into a frequency-dependent IQ imbalance compensation device FD-IQMC for frequency-dependent IQ imbalance compensation, and the compensated output signal I'Q' is input to a RX Baseband. Wherein the FD-IQMC device comprises a FI-iqmc module, a Frac-delay filter and an Amp-FIR filter. The FI-iqmc module is a frequency-independent IQ imbalance compensation module. The Frac-delay filter is a fractional delay filter. The Amp-FIR filter is a real number symmetric amplitude filter.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the Frac-delay filter for phase compensation to compensate for the imbalance in the frequency-selective phase, and then input the signal output from the Frac-delay filter into the Amp-FIR filter for amplitude compensation to compensate for the imbalance in the frequency selectivity amplitude; meanwhile, the other signal that is not selected is processed by the delay module to be time-aligned with the selected signal.

Further, the IQ imbalance parameter estimation value of the transmitting path and the receiving path is obtained by single-tone testing, and the single tones of multiple frequency points correspond to the IQ imbalance parameter estimation values of multiple frequency points.

Further, the FI-iqmc module is configured to: for a signal $x=\cos(\theta)+j\sin(\theta)$, wherein j is a complex number, according to a phase imbalance factor $\Delta\phi$ and an amplitude imbalance factor $\Delta m$ in the IQ imbalance parameter estimation value, the compensation phase and compensation amplitude required by the I-channel signal are set to $-\Delta\phi/2$ and $-\Delta m/2$ respectively, and the compensation phase and compensation amplitude required by the Q-channel signal are set to $\Delta\phi/2$ and $\Delta m/2$ respectively, and the IQ imbalance is compensated as an overall by the following compensation formula:

$$\mathrm{M_{comp}} * \mathrm{x} = \begin{bmatrix} \cos(\Delta\varphi/2) - \Delta m/2 \cdot \cos(\Delta\varphi/2) & \sin(\Delta\varphi/2) - \Delta m/2 \cdot \sin(\Delta\varphi/2) \\ \sin(\Delta\varphi/2) + \Delta m/2 \cdot \sin(\Delta\varphi/2) & \cos(\Delta\varphi/2) + \Delta m/2 \cdot \cos(\Delta\varphi/2) \end{bmatrix} \begin{bmatrix} \mathrm{I} \\ \mathrm{Q} \end{bmatrix}$$

wherein, x represents the IQ signal input to the FI-iqmc module, and the factor $\mathrm{M_{comp}}$ represents the compensation matrix of phase and amplitude.

Further, when the factor $\Delta\phi$ is less than a preset value, $\sin(\Delta\phi)$ is set equal to $\Delta\phi$, $\cos(\Delta\phi)$ is equal to 1, according to this, the formula of the factor $M_{comp}$ is simplified, and a simplified factor $M'_{comp}$ is as follows:

$$M'_{comp} = \begin{bmatrix} 1 - \Delta m/2 & \Delta \varphi/2 \\ \Delta \varphi/2 & 1 + \Delta m/2 \end{bmatrix}$$

and then, the IQ imbalance is compensated as an overall by the following compensation formula:

$$M'_{comp} * x = \begin{bmatrix} 1 - \Delta m/2 & \Delta \varphi/2 \\ \Delta \varphi/2 & 1 + \Delta m/2 \end{bmatrix} \begin{bmatrix} I \\ Q \end{bmatrix}$$

$$= x + \{-\Delta m/2 * I + \Delta \varphi/2 * Q + j(\Delta \varphi/2 * I + \Delta m/2 * Q)\}$$

at this time, the FI-iqmc module performs a matrix multiplication on the input signal through four multipliers to compensate for the frequency-independent IQ imbalance.

Further, the steps of performing phase compensation on one signal output by the FI-iqmc module through a Frac-delay filter are as follows:

obtaining the phase error of the sampling frequency point within the broadband through single-tone testing of multiple frequency points;

performing linear fitting on the obtained phase error;

calculating a factor Group delay according to the phase error after linear fitting, the factor Group delay represents the phase error group delay in the broadband, and the calculation formula is as follows:

$$\text{Group delay} = \frac{\Delta \varphi \ (\text{radian})}{\Delta \omega \ (\text{radian})}$$

Wherein, $\Delta \phi$(radian) is the phase error change within the $\Delta \omega$(radian) frequency band;

calculating a fractional delay sample value to be compensated according to the value of the factor Group delay, and then, designing the fractional delay value of the Frac-delay filter through the Lagrange interpolation method based on the fractional delay sample value to be compensated;

performing phase compensation on the selected signal according to the designed Frac-delay filter, and a phase-compensated signal is obtained.

Further, while the Frac-delay filter performs phase compensation to one signal output by the FI-iqmc module, another signal that is not selected is input into a D1 module for delay processing to align the time of the two signals, wherein the D1 module represents the first delay module.

Further, the steps of performing amplitude compensation on the signal output by the Frac-delay filter through an Amp-FIR filter are as follows:

obtaining the amplitude error of the sampling frequency point within the broadband through single-tone testing of multiple frequency points;

performing an averaging operation on the amplitude error of the frequency point with symmetric positive and negative frequencies;

designing a real number filter with an order of N, wherein the amplitude error parameters of the filter frequency point are obtained through piecewise linear interpolation of the test frequency point, the parameter N is an integer multiple of 2;

calculating the filter coefficient of the real number filter through an inverse fast Fourier transform method according to the amplitude error parameters of the filter frequency point, wherein the filter coefficient is a real number and the coefficient is symmetric;

filtering the signal through the filter coefficient, and an amplitude-compensated signal is obtained.

Further, while the Amp-FIR filter performs amplitude compensation on the signal output by the Frac-delay filter, the signal output from the D1 module is input into a D2 module for delay processing to align the time of the two signals, wherein the D2 module represents the second delay module.

Corresponds to the method, the application also provides a three-stage IQ imbalance compensation system for WiFi broadband transmitting and receiving paths. The system comprising a frequency-dependent IQ imbalance compensation device FD-IQMC. In the design of the present application, the FD-IQMC can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC. Wherein the FD-IQMC device comprises a FI-iqmc module, a Frac-delay filter and an Amp-FIR filter; the FI-iqmc module is a frequency-independent IQ imbalance compensation module, and the Frac-delay filter is a fractional delay filter, and the Amp-FIR filter is a real number symmetric amplitude filter.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the Frac-delay filter for phase compensation to compensate for the imbalance in the frequency-selective phase, and then input the signal output from the Frac-delay filter into the Amp-FIR filter for amplitude compensation to compensate for the imbalance in the frequency selectivity amplitude; meanwhile, the other signal that is not selected is processed by the delay module to be time-aligned with the selected signal.

Further, the application provides another IQ imbalance compensation method for WiFi broadband transmitting and receiving paths. The method comprising: for a transmitting path, an IQ signal output by a TX Baseband is input into a frequency-dependent IQ imbalance compensation device FD-IQMC for frequency-dependent IQ imbalance compensation, and the compensated output signal I'Q' is input to a digital-to-analog converter DAC; for a receiving path, an IQ signal output by an analog-to-digital converter ADC is input into a frequency-dependent IQ imbalance compensation device FD-IQMC for frequency-dependent IQ imbalance compensation, and the compensated output signal I'Q' is input to a RX Baseband. Wherein the FD-IQMC device comprises a FI-iqmc module and a single-channel filter module, the FI-iqmc module is a frequency-independent IQ imbalance compensation module, and the filter coefficient of the single-channel filter is a real number asymmetric form, and the filter coefficient of the single-channel filter is generated by convolving a fractional delay filter coefficient and an amplitude filter coefficient; the phase-frequency response of the single-channel filter compensates for the fractional delay, and the amplitude-frequency response of the single-channel filter compensates for the amplitude error.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the single-channel filter for processing to compensate for the phase and amplitude of frequency-selectivity; meanwhile, the other signal that is not selected is processed by the delay module to be time-aligned with the selected signal.

Corresponds to the method, the application also provides an IQ imbalance compensation system for WiFi broadband transmitting and receiving paths. The system comprising a frequency-dependent IQ imbalance compensation device FD-IQMC. The FD-IQMC device can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC. Wherein the FD-IQMC device comprises a FI-iqmc module and a single-channel filter module. The FI-iqmc module is a frequency-independent IQ imbalance compensation module. The filter coefficient of the single-channel filter is a real number asymmetric form. Specifically, the filter coefficient of the single-channel filter is generated by convolving a fractional delay filter coefficient and an amplitude filter coefficient; the phase-frequency response of the single-channel filter compensates for the fractional delay, and the amplitude-frequency response of the single-channel filter compensates for the amplitude error.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the single-channel filter for processing to compensate for the phase and amplitude of frequency-selectivity; meanwhile, the other signal that is not selected is processed by the delay module to be time-aligned with the selected signal.

Compared with the prior art, the application has the following advantages and positive effects due to the adoption of the above technical solution, as an example: the IQ imbalance compensation method performs IQ imbalance compensation on the IQ signal through a FD-IQMC device. Specifically, the FD-IQMC device includes a non-frequency-selective compensation structure and a frequency-selective compensation structure, performs IQ imbalance compensation in the transmitting path based on a pre-compensation, and performs IQ imbalance compensation in the receiving path based on a post-compensation. By performing broadband IQ calibration through the application, it is possible to compensate for IQ imbalance with frequency-selectivity. The application has the advantages of easy structure control, low resource overhead and high compensation accuracy, and can effectively reduce the image rejection ratio IRR, EVM degradation and bit error rate. In turn, the communication quality can be effectively improved.

BRIEF DESCRIPTION OF THE DRAWINGS

FIG. 1 is a diagram of a TX zero intermediate frequency model.

FIG. 2 is a diagram of an RX zero intermediate frequency model.

FIG.3 is a distribution diagram of the broadband IQ amplitude error.

FIG.4 is a distribution diagram of the broadband IQ phase error.

FIG.5 is a logical diagram of a transmitting path IQ imbalance compensation structure provided by the application.

FIG.6 is a logical diagram of a receiving path IQ imbalance compensation structure provided by the application.

FIG.7 is a diagram showing changes in the IQ amplitude error before and after compensation by the application.

FIG.8 is a diagram showing changes in the IQ phase error before and after compensation by the application.

FIG.9 is a diagram showing changes in the IRR before and after compensation by the application.

DETAILED DESCRIPTION

An IQ imbalance compensation method for WiFi broadband transmitting and receiving paths, and application disclosed in the application will be further described in detail below with reference to the accompanying drawings and specific embodiments. It should be noted that the combinations of technical features or technical features described in the following embodiments should not be considered as isolated, and they may be combined with each other to achieve better technical results. In the accompanying drawings of the following embodiments, the same symbols appearing in each of the accompanying drawings represent the same features or components that can be applied in different embodiments. Thus, once an item is defined in one of the accompanying drawings, no further discussion of it is required in subsequent drawings.

It should be noted that the structures, proportions, dimensions, etc. shown in the attached drawings of this specification are only for the purpose of understanding and reading by those skilled in the art in accordance with the contents disclosed in this specification, and are not intended to limit the conditions under which the application can be implemented. Any modification of the structure, change of the proportion relationship, or adjustment of the size, without affecting the efficacy and purpose of the application, should fall within the scope of the technical content disclosed by the application. The scope of the preferred embodiments of the application includes alternative implementations in which the functions may be performed out of the order described or discussed, including performing the functions in a substantially simultaneous manner or in the reverse order depending upon the functions involved, which should be embodiments of the application will be understood by those skilled in the art to which the embodiments of the application pertain.

Techniques, methods and devices known to those of ordinary skill in the relevant art may not be discussed in detail, but where appropriate, such techniques, methods, and devices should be considered part of the authorized description. In all examples shown and discussed herein, any specific value should be construed as illustrative only and not as limiting. Accordingly, other examples of exemplary embodiments may have different values.

Embodiments

The application provides an IQ imbalance compensation method for WiFi broadband transmitting and receiving paths, which realizes frequency-dependent IQ compensation by setting a frequency-dependent IQ imbalance compensation device FD-IQMC in a signal digital processing channel. The FD-IQ compensation (be abbreviated as FD-IQ) is suitable for frequency-selective IQ imbalance compensation of a transmit (TX) and receive (RX) path.

For a transmitting path, as shown in FIG.5, an IQ signal output by a TX Baseband is input into a frequency-dependent IQ imbalance compensation device FD-IQMC for frequency-dependent IQ imbalance compensation, and the compensated output signal I'Q' is input into the digital-to-analog converter DAC.

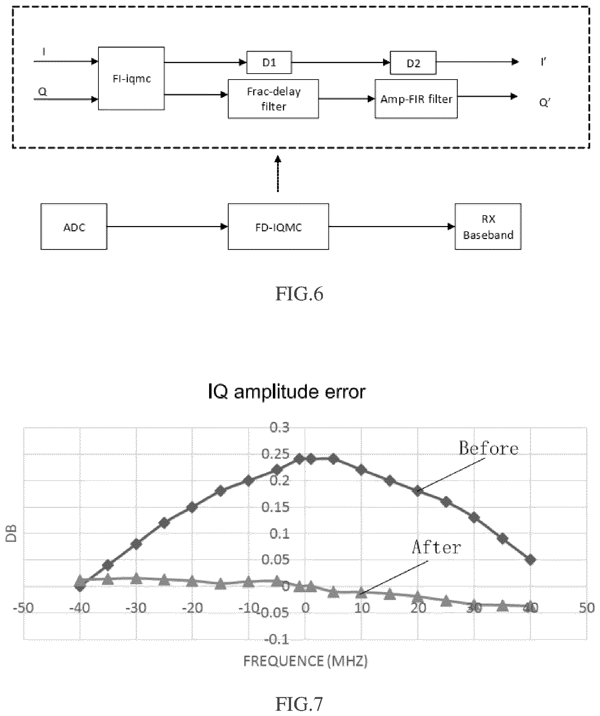

For a receiving path, as shown in FIG.6, an IQ signal output by the analog-to-digital converter ADC is input into a frequency-dependent IQ imbalance compensation device FD-IQMC for frequency-dependent IQ imbalance compensation, and the compensated output signal I'Q' is input into a RX Baseband.

In this embodiment, an IQ imbalance parameter estimation value of the transmitting path and the receiving path can be obtained by single-tone testing. Specifically, a single-tone signal (e.g. a single-tone signal with a frequency of $\omega$) is sent, and then a loop signal is collected, and an IQ imbalance parameter is estimated by a correlation calculation method. The IQ imbalance parameter may specifically include an amplitude imbalance factor (also known as an amplitude mismatch parameter) and a phase imbalance factor (also known as a phase mismatch parameter). Single tones at different frequencies correspond to different IQ imbalance parameter estimation values, and single-tone testing at multiple frequencies can obtain IQ imbalance parameter estimation values at multiple frequencies. In this embodiment, the parameter estimates of the transmit and receive paths are measured separately by switching the internal circuit switches.

In this embodiment, the FD-IQMC device adopts a cascaded three-stage compensation structure. Specifically, the FD-IQMC device comprises a first-stage non-frequency-selective compensation structure, a second-stage phase filter structure and a third-stage amplitude filter structure, three structures are cascaded. For an input IQ signal, the FD-IQMC device is processed in turn through a first-stage non-frequency-selective compensation structure, a second-stage phase filter structure and a third-stage amplitude filter structure according to the IQ imbalance parameter estimation value of the transmitting path and the receiving path.

Specifically, the first-stage non-frequency-selective compensation structure is a FI-iqmc module, and the FI-iqmc module is a frequency-independent IQ imbalance compensation module. As shown in FIG.5 and FIG.6, the I-channel signal and the Q-channel signal of an IQ signal are input into the FI-iqmc module, and the amplitude and phase errors of a frequency point are selected for single-point compensation, so as to perform a frequency-independent overall compensation for the IQ imbalance.

The single-tone signal can be expressed as $x=\cos(\theta)+j\sin(\theta)$, wherein j is a complex number. The overall compensation principle of the FI-iqmc is as follows.

For a single-tone signal $x=\cos(\theta)+j\sin(\theta)$, a phase imbalance factor and an amplitude imbalance factor in the IQ imbalance parameter estimation value can be obtained by single-tone testing. Suppose that the phase imbalance factor is $\Delta\phi$ and the amplitude imbalance factor is $\Delta m$, due to IQ imbalance, the phases that need to be compensated for the I and Q paths are $-\Delta\phi/2$ and $\Delta\phi/2$ respectively, at this time, a signal expression after phase compensation is:

$$x_{comp\_phase} = \cos(\theta - \Delta\varphi/2) + j\sin(\theta + \Delta\varphi/2) = \begin{bmatrix} \cos(\Delta\varphi/2) & \sin(\Delta\varphi/2) \\ \sin(\Delta\varphi/2) & \cos(\Delta\varphi/2) \end{bmatrix} \begin{bmatrix} I \\ Q \end{bmatrix}$$

And the amplitudes that need to be compensated for the I and Q paths are $-\Delta m/2$ and $\Delta m/2$ respectively, at this time, a signal expression after amplitude compensation is:

$$x_{comp\_amp} = \cos(\theta) - \Delta m/2 \cdot \cos(\theta) + j(\sin(\theta) + \Delta m/2 \cdot \sin(\theta)) =$$

$$\begin{bmatrix} 1 - \Delta m/2 & 0 \\ 0 & 1 + \Delta m/2 \end{bmatrix} \begin{bmatrix} I \\ Q \end{bmatrix}$$

The signal expression after phase and amplitude compensation is:

$$x_{comp} = \begin{bmatrix} 1 - \Delta m/2 & 0 \\ 0 & 1 + \Delta m/2 \end{bmatrix} \begin{bmatrix} \cos(\Delta\varphi/2) & \sin(\Delta\varphi/2) \\ \sin(\Delta\varphi/2) & \cos(\Delta\varphi/2) \end{bmatrix} \begin{bmatrix} I \\ Q \end{bmatrix}$$

The calculation formula for the compensation matrix $M_{comp}$ is:

$$M_{comp} = \begin{bmatrix} 1 - \Delta m/2 & 0 \\ 0 & 1 + \Delta m/2 \end{bmatrix} \begin{bmatrix} \cos(\Delta\varphi/2) & \sin(\Delta\varphi/2) \\ \sin(\Delta\varphi/2) & \cos(\Delta\varphi/2) \end{bmatrix}$$

$$= \begin{bmatrix} \cos(\Delta\varphi/2) - \Delta m/2 \cdot \cos(\Delta\varphi/2) & \sin(\Delta\varphi/2) - \Delta m/2 \cdot \sin(\Delta\varphi/2) \\ \sin(\Delta\varphi/2) + \Delta m/2 \cdot \sin(\Delta\varphi/2) & \cos(\Delta\varphi/2) + \Delta m/2 \cdot \cos(\Delta\varphi/2) \end{bmatrix}$$

The compensation algorithm of the FI-iqmc module is:

$$M_{comp} * x =$$

$$\begin{bmatrix} \cos(\Delta\varphi/2) - \Delta m/2 \cdot \cos(\Delta\varphi/2) & \sin(\Delta\varphi/2) - \Delta m/2 \cdot \sin(\Delta\varphi/2) \\ \sin(\Delta\varphi/2) + \Delta m/2 \cdot \sin(\Delta\varphi/2) & \cos(\Delta\varphi/2) + \Delta m/2 \cdot \cos(\Delta\varphi/2) \end{bmatrix} \begin{bmatrix} I \\ Q \end{bmatrix}$$

Wherein, x represents the IQ signal input to the FI-iqmc module, and the factor $M_{comp}$ represents the compensation matrix of the phase and amplitude.

In a preferred embodiment, considering that the aforementioned phase imbalance factor $\Delta\phi$ is generally small (because the imbalance deviation is generally small), and when $\Delta\phi$ is small, $\sin(\Delta\phi)\approx\Delta\phi$, $\cos(\Delta\phi)\approx1$. Therefore, the compensation matrix $M_{comp}$ is simplified to reduce the compensation structure resource overhead.

In the specific implementation, the $\Delta\phi$ can be compared with a preset value. When $\Delta\phi$ is less than the preset value, $\sin(\Delta\phi)$ can be set equal to $\Delta\phi$, and $\cos(\Delta\phi)$ can be set equal to 1, that is, $\sin(\Delta\phi/2)$ is equal to $\Delta\phi/2$, and $\cos(\Delta\phi/2)$ is equal to 1. Substituting into the compensation matrix $M_{comp}$, the following formula can be obtained:

$$M_{comp} = \begin{bmatrix} 1 - \Delta m/2 & (1 - \Delta m/2) \cdot \Delta\varphi/2 \\ (1 + \Delta m/2) \cdot \Delta\varphi/2 & 1 + \Delta m/2 \end{bmatrix}$$

Since $\Delta\phi$ is small, the product value of the formula $(\Delta m/2 \cdot \Delta\phi/2)$ is also very small. Let $(\Delta m/2 \cdot \Delta\phi/2) = 0$, and the simplified compensation matrix $M'_{comp}$ can be obtained:

$$M'_{comp} = \begin{bmatrix} 1 - \Delta m/2 & \Delta\varphi/2 \\ \Delta\varphi/2 & 1 + \Delta m/2 \end{bmatrix}$$

and then, the IQ imbalance is compensated as an overall by the following compensation formula:

$$M'_{comp} * x = \begin{bmatrix} 1 - \Delta m/2 & \Delta\varphi/2 \\ \Delta\varphi/2 & 1 + \Delta m/2 \end{bmatrix} \begin{bmatrix} I \\ Q \end{bmatrix}$$

$$= x + \{ -\Delta m/2 * I + \Delta\varphi/2 * Q + j(\Delta\varphi/2 * I + \Delta m/2 * Q) \}$$

At this time, in the FI-iqmc module, the frequency-independent IQ imbalance can be compensated by four multipliers to perform a matrix multiplication on the input signal.

For the I-channel signal and Q-channel signal output from the FI-iqmc module, selecting one of the signals and input into the second-stage phase filter structure and the third-stage amplitude filter structure in sequence for processing, meanwhile, the other signal that is not selected is delayed by the delay module to be time-aligned with the selected signal.

In this embodiment, the second-stage phase filter structure is a Frac-delay filter. The Frac-delay filter is a fractional delay filter, which can perform phase compensation on the input signal, so as to compensate for the imbalance in the frequency-selective phase.

For ZIF structures such as DAC/ADC, low-pass filters, and IQ amplifiers, the frequency-selective phase error of their IQ imbalance is generally linear, that is, the IQ phase error within the broadband presents a phase change or an approximate phase change. Utilizing the above linear characteristics, this embodiment uses a Frac-delay filter to compensate for this phase imbalance when setting the phase filter structure. And the Frac-delay filter adopts a single-channel filter and performs compensation processing on only one channel of the I channel and the Q channel.

Specifically, the steps of performing phase compensation on one signal (the I-channel signal or the Q-channel signal) output by the FI-iqmc module through a Frac-delay filter module are as follows.

S211, obtaining the phase error of the sampling frequency point within the broadband through single-tone testing of multiple frequency points.

S212, performing linear fitting on the obtained phase error.

S213, calculating a factor Group delay according to the phase error after linear fitting, the factor Group delay represents the phase error group delay in the broadband, and the calculation formula is as follows:

$$\text{Group delay} = \frac{\Delta\varphi \,(\text{radian})}{\Delta\omega \,(\text{radian})}$$

Wherein, $\Delta\phi$(radian) is the phase error change within the $\Delta\omega$(radian) frequency band.

S214, calculating a fractional delay sample value to be compensated according to the value of the factor Group delay, and then, designing the fractional delay value of the Frac-delay filter through the Lagrange interpolation method based on the fractional delay sample value to be compensated.

S215, performing phase compensation on the selected signal (the I-channel signal or the Q-channel signal) according to the designed Frac-delay filter, and a phase-compensated signal is obtained.

When the Frac-delay filter module performs phase compensation on the one signal output by the FI-iqmc, the other unselected signal is input into the first delay module D1 for delay processing to align the time of the two signals.

As shown in FIG.5 and FIG.6, an example of processing the Q-channel signal is performed by the Frac-delay filter module, that is, the Q signal is selected, and the I signal is input into the first delay module D1 for delay processing to align the time of the two signals (the I-channel signal and the Q-channel signal).

The signal output from the Frac-delay filter module is then input into the third-stage amplitude filter structure for processing.

In this embodiment, the third-stage amplitude filter structure is an Amp-FIR filter. The Amp-FIR filter is a real number symmetric amplitude filter, which can perform amplitude compensation on the signal to compensate for the imbalance in frequency-selective amplitude.

For ZIF structures such as DAC/ADC, low-pass filters, IQ amplifiers, etc., the frequency selectivity amplitude error of their IQ imbalance is generally manifested as an even function distribution, that is, it is manifested as a bilateral symmetric characteristic of positive and negative frequencies. Utilizing the above symmetry characteristics, this embodiment selects the Amp-FIR filter to compensate for this amplitude imbalance when an amplitude filter needs to be set. Compared with the conventional direct use of complex filters for compensation, this embodiment can significantly reduce resource overhead and chip area while ensuring that the performance accuracy meets the requirements.

Specifically, the steps of performing amplitude compensation on the signal output by the Frac-delay filter through the real symmetric amplitude filter Amp-FIR filter are as follows.

S311, obtaining the amplitude error of the sampling frequency point within the broadband through single-tone testing of multiple frequency points.

S312, performing an averaging operation on the amplitude error of the frequency point with symmetric positive and negative frequencies.

S313, designing a real number filter with an order of N, wherein the amplitude error parameters of the filter frequency point are obtained through piecewise linear interpolation of the test frequency point, the parameter N is an integer multiple of 2.

S314, calculating the filter coefficient of the real number filter through an inverse fast Fourier transform (IFFT) method according to the amplitude error parameters of the filter frequency point, wherein the filter coefficient is a real number and the coefficient is symmetric.

S315, filtering the signal through the filter coefficient, and an amplitude-compensated signal is obtained.

As shown in FIG.5 and FIG.6, when the Amp-FIR filter module performs amplitude compensation on the phase-compensated Q-channel signal output by the Frac-delay filter, the I-channel signal output from the D1 is input into the second delay module D2 for delay processing to align the time of the two signals.

In the embodiment provided by the application, estimates the IQ imbalance parameter based on a single-tone testing method in a broadband, and adopts a time domain compensation, so that it does not require a specific training sequence, nor does it use broadband signals for a large number of calculation statistics. And the time domain compensation is more stable than the frequency domain compensation. Meantime, based on the characteristic law of the ZIF structures such as DAC/ADC, low-pass filters, and IQ amplifiers, the cascaded real number filter compensation design is configured. Compared with the conventional use of complex filters, the application reduces resource overhead and chip area, while ensuring performance accuracy.

Another embodiment of the present application, further provides a three-stage IQ imbalance compensation system for WiFi broadband transmitting and receiving paths. The system is used to implement the steps in the above method.

The system comprising a frequency-dependent IQ imbalance compensation device FD-IQMC. The FD-IQMC can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC. Wherein the FD-IQMC device comprises a FI-iqmc module, a Frac-delay filter and an Amp-FIR filter; the FI-iqmc module is a frequency-independent IQ imbalance compensation module, and the Frac-delay filter is a fractional delay filter, and the Amp-FIR filter is a real number symmetric amplitude filter.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance, wherein the IQ imbalance parameters include a phase error information and an amplitude error information. And then, for the I-channel signal and Q-channel signal output from the FI-iqmc module, selecting one of the signals to be input into the Frac-delay filter for phase compensation to compensate for the imbalance in the frequency-selective phase, and then input the signal output from the Frac-delay filter into the Amp-FIR filter for amplitude compensation to compensate for the imbalance in the frequency selectivity amplitude. Meanwhile, the other signal that is not selected is processed by the delay module to be time-aligned with the selected signal.

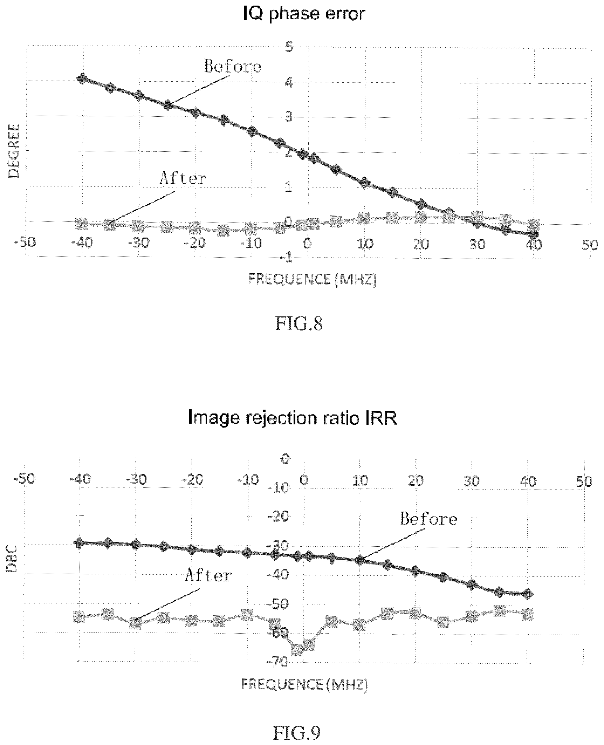

Through the three-stage compensation system provided by the above embodiment, broadband IQ imbalance can be compensated, the transmission path uses a pre-compensation, and the reception path uses a post-compensation. In terms of resource overhead, the first-stage non-frequency-selective compensation of this embodiment is equivalent to a first-order structure, which only requires four multipliers to complete; the second-stage phase filter only needs a few orders to meet the accuracy requirements of fractional delay; the third-stage amplitude filter, the order is related to the single-tone test accuracy requirements and the system sampling rate. According to actual measurements, 16th to 32nd orders can generally meet the requirements. The embodiment has a clear structure, and has advantages of easy structure control, low resource occupation and high compensation accuracy. And it has significant improvements in IRR, EVM, and bit error rate, etc. As shown in FIG.7 to FIG.9, shows the changes in phase error, amplitude error, and IRR before and after compensation in the actual measurements of the examples.

Other technical features are described in the previous embodiment, which will not be reiterated here.

As a further improvement, the application provides an alternative compensation embodiment. In this embodiment, the second-stage phase filter and the third-stage amplitude filter are combined, so as to design a single-channel filter module with fractional delay and amplitude compensation effect. The only difference from the previous embodiment is that the second-stage phase filter and the third-stage amplitude filter inside the FD-IQMC device are combined into one module. Correspondingly, the delay module in FIG.5 and FIC.6 is also adjusted to one, and other technical features remain unchanged.

Specifically, an IQ imbalance compensation method for WiFi broadband transmitting and receiving paths is provided. The embodiment is described in detail below.

For a transmitting path, an IQ signal output by a TX Baseband is input into a frequency-dependent IQ imbalance compensation device FD-IQMC for frequency-dependent IQ imbalance compensation, and the compensated output signal I'Q' is input to a digital-to-analog converter DAC.

For a receiving path, an IQ signal output by an analog-to-digital converter ADC is input into the frequency-dependent IQ imbalance compensation device FD-IQMC for frequency-dependent IQ imbalance compensation, and the compensated output signal I'Q' is input to a RX Baseband.

Wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance, wherein the FI-iqmc module is a frequency-independent IQ imbalance compensation module. And then, for the I-channel signal and Q-channel signal output from the FI-iqmc module, selecting one of the signals to be input into the single-channel filter for processing to compensate for the phase and amplitude of frequency-selectivity. Wherein the filter coefficient of the single-channel filter is a real number asymmetric form, and the filter coefficient of the single-channel filter is generated by convolving a fractional delay filter coefficient and an amplitude filter coefficient; wherein the phase-frequency response of the single-channel filter compensates for the fractional delay, and the amplitude-frequency response of the single-channel filter compensates for the amplitude error. Meanwhile, the other signal that is not selected is processed by the delay module to be time-aligned with the selected signal.

In this embodiment, the FD-IQMC device is configured as a two-stage compensation structure. After the IQ signal is compensated as a whole by the first-stage FI-iqmc module, one signal is selected from the I-channel signal and the Q-channel signal to be input into the second-stage single-channel filter module for compensation processing. The single-channel filter can compensate for the phase and amplitude of frequency-selective. For example, if the Q-channel signal is selected to enter the single-channel filter for frequency-selective phase and amplitude compensation, the I-channel signal is processed through a delay module to be time-aligned with the selected Q-channel signal.

Specifically, the filter coefficient of the single-channel filter is generated by convolving a fractional delay filter coefficient and an amplitude filter coefficient, and the phase-frequency response of the single-channel filter compensates for the fractional delay, and the amplitude-frequency response of the single-channel filter compensates for the amplitude error. The single-channel filter contains the characteristics of the previous two filters (i.e. the fractional delay filter and the amplitude filter) combined.

As an example, let the fractional delay filter coefficient be H1 and the amplitude filter coefficient be H2 (the filter coefficient of a general filter is a real number), then the filter coefficient of a single-channel filter is H=conv(H1, H2), and the function conv(H1, H2) represents the convolution of the return coefficients H1 and H2, wherein, H is the filter coefficient after convolution. The convolution operation on the coefficients H1 and H2 can be calculated based on software, and then the calculation results are configured in the memory RAM.

Compared with the three-stage compensation structure of the embodiment, the embodiment combines fractional delay processing and amplitude compensation processing into a single filter module for compensation processing. After combining, the filter coefficient H becomes a real asymmetric form. Compared with the real symmetric filter, the resource overhead will increase, technical personnel in this field can make adaptive choices according to needs. It should be noted that, compared with the conventional method of using a complex filter, the resource overhead of the combining solution is still relatively small.

Corresponding to the solution of combining the second-stage phase filter and the third-stage amplitude filter, the application provides another IQ imbalance compensation system for WiFi broadband transmitting and receiving paths. The system is a two-stage compensation structure of a FI-iqmc module and a single-channel filter.

In this embodiment, the system comprising a frequency-dependent IQ imbalance compensation device FD-IQMC, the FD-IQMC can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC.

The FD-IQMC device is configured as follows: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance, wherein the FI-iqmc module is a frequency-independent IQ imbalance compensation module. And then, for the I-channel signal and Q-channel signal output from the FI-iqmc module, selecting one of the signals to be input into the single-channel filter for processing to compensate for the phase and amplitude of frequency-selectivity, wherein the filter coefficient of the single-channel filter is a real number asymmetric form, and the filter coefficient of the single-channel filter is generated by convolving a fractional delay filter coefficient and an amplitude filter coefficient; the phase-frequency response of the single-channel filter compensates for the fractional delay, and the amplitude-frequency response of the single-channel filter compensates for the amplitude error. Meanwhile, the other signal that is not selected is processed by the delay module to be time-aligned with the selected signal.

Other technical features are described in the previous embodiment, which will not be reiterated here.

In the above description, the disclosure of the application is not intended to limit itself in these respects. Rather, the various components may be selectively and operatively combined in any number within the intended scope of this disclosure. The steps of the methods or algorithms described in conjunction with the embodiments disclosed herein may be implemented directly using hardware, a software module executed by a processor, or a combination of the two. The software module can be placed in random access memory (RAM), memory, read-only memory (ROM), electrically programmable ROM, electrically erasable programmable ROM, registers, hard disk, removable disk, CD-ROM, or any other form of storage medium known in the technical field.

Additionally, terms like "comprising", "including" and "having" should by default be construed as inclusive or open, rather than exclusive or closed, unless explicitly defined to the contrary. All technical, scientific or other terms have the meaning as understood by those skilled in the art unless they are defined to the contrary. Common terms found in dictionaries should not be interpreted too ideally or too practically in the context of related technical documents unless this disclosure explicitly defines them as such. Any changes and modifications made by those of ordinary skill in the field of the application according to the above disclosure fall within the protection scope of the claims.

## Claims

1. An IQ imbalance compensation method for WiFi broadband transmitting and receiving paths, the method comprising:

for a transmitting path, an IQ signal output by a TX Baseband is input into a frequency-dependent IQ imbalance compensation device FD-IQMC for frequency-dependent IQ imbalance compensation, and the compensated output signal I'Q' is input to a digital-to-analog converter DAC; and for a receiving path, an IQ signal output by an analog-to-digital converter ADC is input into a frequency-dependent IQ imbalance compensation device FD-IQMC for frequency-dependent IQ imbalance compensation, and the compensated output signal I'Q' is input to a RX Baseband;

the FD-IQMC device comprises a FI-iqmc module, a Frac-delay filter and an Amp-FIR filter; the FI-iqmc module is a frequency-independent IQ imbalance compensation module, and the Frac-delay filter is a fractional delay filter, and the Amp-FIR filter is a real number symmetric amplitude filter;

wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the Frac-delay filter for phase compensation to compensate for the imbalance in the frequency-selective phase; and then input the signal output from the Frac-delay filter into the Amp-FIR filter for amplitude compensation to compensate for the imbalance in the frequency selectivity amplitude; meanwhile, the other signal that is not selected is processed by the delay module to be time-aligned with the selected signal.

2.  The method according to claim 1, further comprising:
    the IQ imbalance parameter estimation value of the transmitting path and the receiving path is obtained by single-tone testing, and the single tones of multiple frequency points correspond to the IQ imbalance parameter estimation values of multiple frequency points.

3.  The method according to claim 1, further comprising:

    the FI-iqmc module is configured to: for a signal $x=\cos(\theta)+j\sin(\theta)$, wherein j is a complex number, according to a phase imbalance factor $\Delta\phi$ and an amplitude imbalance factor $\Delta m$ in the IQ imbalance parameter estimation value, the compensation phase and compensation amplitude required by the I-channel signal are set to $-\Delta\phi/2$ and $-\Delta m/2$ respectively, and the compensation phase and compensation amplitude required by the Q-channel signal are set to $\Delta\phi/2$ and $\Delta m/2$ respectively, and the IQ imbalance is compensated as an overall by the following compensation formula:

    $$M_{comp} * x =$$

    $$\begin{bmatrix} \cos(\Delta\varphi/2) - \Delta m/2 \cdot \cos(\Delta\varphi/2) & \sin(\Delta\varphi/2) - \Delta m/2 \cdot \sin(\Delta\varphi/2) \\ \sin(\Delta\varphi/2) + \Delta m/2 \cdot \sin(\Delta\varphi/2) & \cos(\Delta\varphi/2) + \Delta m/2 \cdot \cos(\Delta\varphi/2) \end{bmatrix} \begin{bmatrix} I \\ Q \end{bmatrix},$$

    wherein, x represents the IQ signal input to the FI-iqmc module, and the factor $M_{comp}$ represents the compensation matrix of phase and amplitude.

4.  The method according to claim 3, further comprising:

    when the factor $\Delta\phi$ is less than a preset value, $\sin(\Delta\phi)$ is set equal to $\Delta\phi$, $\cos(\Delta\phi)$ is equal to 1, according to this, the formula of the factor $M_{comp}$ is simplified, and a simplified factor $M'_{comp}$ is as follows:

    $$M'_{comp} = \begin{bmatrix} 1 - \Delta m/2 & \Delta\varphi/2 \\ \Delta\varphi/2 & 1 + \Delta m/2 \end{bmatrix},$$

    and then, the IQ imbalance is compensated as an overall by the following compensation formula:

    $$M'_{comp} * x = \begin{bmatrix} 1 - \Delta m/2 & \Delta\varphi/2 \\ \Delta\varphi/2 & 1 + \Delta m/2 \end{bmatrix} \begin{bmatrix} I \\ Q \end{bmatrix}$$

    $$= x + \{-\Delta m/2 * I + \Delta\varphi/2 * Q + j(\Delta\varphi/2 * I + \Delta m/2 * Q)\},$$

    at this time, the FI-iqmc module performs a matrix multiplication on the input signal through four multipliers to compensate for the frequency-independent IQ imbalance.

5. The method according to claim 1, further comprising:
the steps of performing phase compensation on one signal output by the FI-iqmc module through a Frac-delay filter are as follows:

> obtaining the phase error of the sampling frequency point within the broadband through single-tone testing of multiple frequency points;
> performing linear fitting on the obtained phase error;
> calculating a factor Group delay according to the phase error after linear fitting, the factor Group delay represents the phase error group delay in the broadband, and the calculation formula is as follows:

$$\text{Group delay} = \frac{\Delta\varphi\ (\text{radian})}{\Delta\omega\ (\text{radian})},$$

> Wherein, $\Delta\phi$(radian) is the phase error change within the $\Delta\omega$(radian) frequency band;
> calculating a fractional delay sample value to be compensated according to the value of the factor Group delay, and then, designing the fractional delay value of the Frac-delay filter through the Lagrange interpolation method based on the fractional delay sample value to be compensated;
> performing phase compensation on the selected signal according to the designed Frac-delay filter, and a phase-compensated signal is obtained.

6. The method according to claim 5, further comprising:
while the Frac-delay filter performs phase compensation to one signal output by FI-iqmc module, another signal that is not selected is input into a D1 module for delay processing to align the time of the two signals, wherein the D1 module represents the first delay module.

7. The method according to claim 6, further comprising:
the steps of performing amplitude compensation on the signal output by the Frac-delay filter through an Amp-FIR filter are as follows:

> obtaining the amplitude error of the sampling frequency point within the broadband through single-tone testing of multiple frequency points;
> performing an averaging operation on the amplitude error of the frequency point with symmetric positive and negative frequencies;
> designing a real number filter with an order of N, wherein the amplitude error parameters of the filter frequency point are obtained through piecewise linear interpolation of the test frequency point, the parameter N is an integer multiple of 2;
> calculating the filter coefficient of the real number filter through an inverse fast Fourier transform method according to the amplitude error parameters of the filter frequency point, wherein the filter coefficient is a real number and the coefficient is symmetric;
> filtering the signal through the filter coefficient, and an amplitude-compensated signal is obtained.

8. The method according to claim 7, further comprising:
while the Amp-FIR filter performs amplitude compensation on the signal output by the Frac-delay filter, the signal output from the D1 module is input into a D2 module for delay processing to align the time of the two signals, wherein the D2 module represents the second delay module.

9. A three-stage IQ imbalance compensation system for WiFi broadband transmitting and receiving paths, the system comprising:

> a frequency-dependent IQ imbalance compensation device FD-IQMC, the FD-IQMC can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC;
> the FD-IQMC device comprises a FI-iqmc module, a Frac-delay filter and an Amp-FIR filter; the FI-iqmc module is a frequency-independent IQ imbalance compensation module, and the Frac-delay filter is a fractional delay filter, and the Amp-FIR filter is a real number symmetric amplitude filter;

wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the Frac-delay filter for phase compensation to compensate for the imbalance in the frequency-selective phase; and then input the signal output from the Frac-delay filter into the Amp-FIR filter for amplitude compensation to compensate for the imbalance in the frequency selectivity amplitude; meanwhile, the other signal that is not selected is processed by the delay module to be time-aligned with the selected signal.

10. An IQ imbalance compensation method for WiFi broadband transmitting and receiving paths, the method comprising:

for a transmitting path, an IQ signal output by a TX Baseband is input into a frequency-dependent IQ imbalance compensation device FD-IQMC for frequency-dependent IQ imbalance compensation, and the compensated output signal I'Q' is input to a digital-to-analog converter DAC; and for a receiving path, an IQ signal output by an analog-to-digital converter ADC is input into a frequency-dependent IQ imbalance compensation device FD-IQMC for frequency-dependent IQ imbalance compensation, and the compensated output signal I'Q' is input to a RX Baseband;
the FD-IQMC device comprises a FI-iqmc module and a single-channel filter module, the FI-iqmc module is a frequency-independent IQ imbalance compensation module, and the filter coefficient of the single-channel filter is a real number asymmetric form, and the filter coefficient of the single-channel filter is generated by convolving a fractional delay filter coefficient and an amplitude filter coefficient; the phase-frequency response of the single-channel filter compensates for the fractional delay, and the amplitude-frequency response of the single-channel filter compensates for the amplitude error;
wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the single-channel filter for processing to compensate for the phase and amplitude of frequency-selectivity; meanwhile, the other signal that is not selected is processed by the delay module to be time-aligned with the selected signal.

11. An IQ imbalance compensation system for WiFi broadband transmitting and receiving paths, the system comprising:

a frequency-dependent IQ imbalance compensation device FD-IQMC, the FD-IQMC can be arranged in a transmitting path for pre-compensating an IQ signal to be input to a digital-to-analog converter DAC, and the FD-IQMC may also be arranged in a receiving path for post-compensating an IQ signal output by an analog-to-digital converter ADC;
the FD-IQMC device comprises a FI-iqmc module and a single-channel filter module, the FI-iqmc module is a frequency-independent IQ imbalance compensation module, and the filter coefficient of the single-channel filter is a real number asymmetric form, and the filter coefficient of the single-channel filter is generated by convolving a fractional delay filter coefficient and an amplitude filter coefficient; the phase-frequency response of the single-channel filter compensates for the fractional delay, and the amplitude-frequency response of the single-channel filter compensates for the amplitude error;
wherein, the FD-IQMC device is configured to: for an input IQ signal, according to an IQ imbalance parameter estimation value of the path, the FI-iqmc module performs single-point compensation for the input I-channel signal and the Q-channel signal by selecting the amplitude and phase error of one frequency point, so as to perform a frequency-independent overall compensation for the IQ imbalance; and then, for the I-channel signal and Q-channel signal output from the FI-iqmc module, selecting one of the signals to be input into the single-channel filter for processing to compensate for the phase and amplitude of frequency-selectivity; meanwhile, the other signal that is not selected is processed by the delay module to be time-aligned with the selected signal.

FIG.1

FIG.2

## IQ amplitude error

FREQUENCE (MHZ)

FIG.3

## IQ phase error

FIG.4

FIG.5

FIG.6

IQ amplitude error

FIG.7

## IQ phase error

FIG.8

## Image rejection ratio IRR

FIG.9

## INTERNATIONAL SEARCH REPORT

| International application No. |
|---|
| **PCT/CN2022/108588** |

### A. CLASSIFICATION OF SUBJECT MATTER

H04L 27/26(2006.01)i; H04B 17/11(2015.01)i

According to International Patent Classification (IPC) or to both national classification and IPC

### B. FIELDS SEARCHED

Minimum documentation searched (classification system followed by classification symbols)

H04L27/-; H04B17/-

Documentation searched other than minimum documentation to the extent that such documents are included in the fields searched

Electronic data base consulted during the international search (name of data base and, where practicable, search terms used)

CNTXT, CNABS, CNKI: TX, RX, I, Q, 补偿, 频率选择性, 频率无关, 幅度, 相位, 失衡, 滤波器, 频率相关; VEN, USTXT, WOTXT, EPTXT, 3GPP: TX, RX, I, Q, compensation, frequency independent, frequency dependent, filter, phase, imbalance, amplitude

### C. DOCUMENTS CONSIDERED TO BE RELEVANT

| Category* | Citation of document, with indication, where appropriate, of the relevant passages | Relevant to claim No. |
|---|---|---|
| PX | CN 114374593 A (SHANGHAI WUQI MICROELECTRONICS CO., LTD.) 19 April 2022 (2022-04-19)<br>description, paragraphs [0011]-[0050] | 1-11 |
| Y | US 2011069744 A1 (LAUDEL KENNAN H et al.) 24 March 2011 (2011-03-24)<br>description, paragraphs [0024]-[0027] and [0057]-[0066], and figures 1, 11 and 12 | 1-11 |
| Y | US 2015071391 A1 (WILHELMSSON LEIF et al.) 12 March 2015 (2015-03-12)<br>description, paragraphs [0008], [0049], [0056], [0060] and [0065] | 1-11 |
| A | US 2013121388 A1 (TSENG CHING-YIH et al.) 16 May 2013 (2013-05-16)<br>entire document | 1-11 |
| A | CN 105245475 A (MEDIATEK INC.) 13 January 2016 (2016-01-13)<br>entire document | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2022** | **01 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/108588**

| Patent document cited in search report | | | Publication date (day/month/year) | Patent family member(s) | | | Publication date (day/month/year) |
|---|---|---|---|---|---|---|---|
| CN | 114374593 | A | 19 April 2022 | None | | | |
| US | 2011069744 | A1 | 24 March 2011 | US | 8385457 | B2 | 26 February 2013 |
| US | 2015071391 | A1 | 12 March 2015 | WO | 2013156044 | A1 | 24 October 2013 |
| | | | | EP | 2839620 | A1 | 25 February 2015 |
| | | | | US | 9264156 | B2 | 16 February 2016 |
| | | | | WO | 2013156044 | A8 | 27 December 2013 |
| | | | | EP | 2839620 | B1 | 27 December 2017 |
| US | 2013121388 | A1 | 16 May 2013 | TW | 201320668 | A | 16 May 2013 |
| | | | | CN | 103259750 | A | 21 August 2013 |
| | | | | CN | 103259750 | B | 06 January 2016 |
| | | | | US | 9385656 | B2 | 05 July 2016 |
| CN | 105245475 | A | 13 January 2016 | US | 9231839 | B1 | 05 January 2016 |
| | | | | DE | 102014218909 | A1 | 07 January 2016 |

Form PCT/ISA/210 (patent family annex) (January 2015)

**REFERENCES CITED IN THE DESCRIPTION**

**Patent documents cited in the description**

- CN 202210016521